# EUROPEAN PATENT SPECIFICATION

(11) **EP 4 123 276 B1**
(45) Date of publication and mention of the grant of the patent: **23.04.2025**
(21) Application number: 21186807.0
(22) Date of filing: 20.07.2021
(51) Int. Cl.: G01K 7/42, G01K 3/14

(54) **SYSTEM FOR MONITORING A DEVICE**
SYSTEM ZUR ÜBERWACHUNG EINER VORRICHTUNG
SYSTÈME DE SURVEILLANCE D'UN DISPOSITIF

(43) Date of publication of application: 25.01.2023
(73) Proprietor: ABB SCHWEIZ AG, 5400 Baden (CH)
(72) Inventor: OSTROWSKI, Joerg, 8048 Zürich (CH); WILDERMUTH, Stephan, 69514 Laudenbach (DE); GITZEL, Ralf, 68165 Mannheim (DE); KAUFMANN, Patrik Reto, 5400 Baden (CH); GEBHARDT, Joerg, 55130 Mainz (DE); KOENIG, Kai, 69190 Walldorf (DE); SAMUL, Boguslaw, 31-345 Krakow (PL)
(74) Representative: Maiwald GmbH

(56) References cited:
- EP-A1- 3 671 997
- EP-A1- 3 706 270

## Description

### FIELD OF THE INVENTION

The present invention relates a system for monitoring a device and to a method of monitoring a device.

### BACKGROUND OF THE INVENTION

The temperature of a power device (for example, a low power, medium power or high voltage switchgear) needs to stay within device specific limits to avoid damage from thermal stress.

Temperature monitoring, for example using measurements with infrared (IR) sensors is used to control that these limits are adhered to.

The temperature can be monitored with a sensor but only at positions that are accessible for the sensor (measurable points meas-pt). Other positions or locations can be more important locations (important-pt) of interest, in that they could have higher temperature and be more likely to lead to device failure, but are often not accessible, i.e. hidden for the sensor.

The temperature at these most important points, positions or locations can therefore not directly be monitored by sensors alone.

EP3671997A1 relates to a system for monitoring a switchgear. The system comprises at least one sensor, a processing unit, and an output unit. The at least one sensor is configured to acquire temperature information data for at least two locations of a switchgear. The at least one sensor is configured to provide the processing unit with the temperature information data for the at least two locations. The processing unit is configured to determine e.g. a temperature at a new location of the switchgear different to the at least two locations. The determination comprises utilization of the temperature information data for the at least two locations and the relative positions of the new location and the at least two locations. The output unit is configured to output the temperature at the new location and/or information based on the temperature at the new location.

There is a need to address this issue.

### SUMMARY OF THE INVENTION

Therefore, it would be advantageous to have an improved technique to monitor a device.

The object of the present invention is solved with the subject matter of the independent claims, wherein further embodiments are incorporated in the dependent claims.

Appended claim 1 defines a system for monitoring a device. Appended claim 8 defines a method for monitoring a device. The invention and its scope of protection is defined by these independent claims.

In a first aspect, there is provided a system for monitoring a device, the system comprising:
- at least one temperature sensor;
- a processing unit; and
- an output unit.

The at least one temperature sensor is configured to acquire at least one temperature measurement at a first location of an operational device, and the first location is in thermal contact with a second location of the operational device. The at least one temperature sensor is configured to provide the at least one temperature measurement to the processing unit. The processing unit is configured to select a simulated temperature distribution of the first location of the simulated device from a plurality of simulated temperature distributions of the first location of the simulated device. The selection comprises a comparison of the at least one temperature measurement with the plurality of simulated temperature distributions of the first location. The plurality of simulated temperature distributions of the first location each relate to a different situation with respect to simulated operation of the simulated device. For each of the different situations there is a correlation between a simulated temperature distribution of the first location and a simulated temperature at the second location of the simulated device. The processing unit is configured to determine that a hot spot exists or is developing at the second location of the operational device comprising utilization of the correlation between the simulated temperature distribution of the first location and the second location for the selected simulated temperature distribution of the first location of the simulated device. The output unit is configured to output an indication of a fault at the second location of the operational device.

In an example, the temperature measurement can be at one location or a number of different locations. Thus, a temperature measurement at one location can be used to select a simulated correlation between that location where a measurement can be made to a second location where a measurement is difficult to make can be utilized to determine if there is a hot spot. However, a number of temperature measurements at different locations can be used to determine a number of simulated temperature distributions for the same locations, and a simulated correlation between simulated temperatures at these first locations and a second location, where it is physically difficult to take measurements can be used to determine if there is a problem at this hard to measure location.

According to an example, the at least one temperature sensor comprises one or more infrared cameras, one or more Surface Acoustic Wave sensor, or one or more RFID sensors.

According to an example, the at least one temperature measurement comprises a plurality of temperature measurements, and wherein the plurality of temperature measurements were acquired at the same time.

According to an example, the at least one temperature sensor is an infrared camera, and wherein the the at least one temperature measurement comprises an infrared image of the first location.

According to an example, the plurality of simulated temperature distributions are simulated in a process that comprises utilization of finite element analysis.

According to an example, the correlation between the simulated temperature distribution of the first location and the simulated temperature at the second location of the simulated device for each of the different situations was determined through utilization of finite element analysis.

According to an example, the comparison of the at least one temperature measurement with the plurality of simulated temperature distributions comprises utilization of a matrix norm or a machine learning algorithm implemented by the processing unit.

In a second aspect, there is provided a method for monitoring a device comprising:
a) acquiring by at least one temperature sensor at least one temperature measurement at a first location of an operational device, and wherein the first location is in thermal contact with a second location of the operational device;
b) providing the at least one temperature sensor to a processing unit;
c) selecting by the processing unit a simulated temperature distribution of the first location of the simulated device from a plurality of simulated temperature distributions of the first location of the simulated device, wherein the selecting comprises comparing the at least one temperature measurement with the plurality of simulated temperature distributions of the first location, wherein the plurality of simulated temperature distributions of the first location each relate to a different situation with respect to simulated operation of the simulated device, and wherein for each of the different situations there is a correlation between a simulated temperature distribution of the first location and a simulated temperature at the second location of the simulated device;
d) determining by the processing unit that a hot spot exists or is developing at the second location of the operational device, and wherein the determining comprises utilizing the correlation between the simulated temperature distribution of the first location and the second location for the selected simulated temperature distribution of the first location of the simulated device; and
e) outputting by an output unit an indication of a fault at the second location of the operational device.

According to an example, the at least one temperature sensor comprises one or more infrared cameras, one or more Surface Acoustic Wave sensor, or one or more RFID sensors.

According to an example, the at least one temperature measurement comprises a plurality of temperature measurements, and wherein the plurality of temperature measurements were acquired at the same time.

According to an example, the at least one temperature sensor is an infrared camera, and wherein the the at least one temperature measurement comprises an infrared image of the first location.

According to an example, the plurality of simulated temperature distributions are simulated in a process that comprises utilization of finite element analysis.

According to an example, the correlation between the simulated temperature distribution of the first location and the simulated temperature at the second location of the simulated device for each of the different situations was determined through utilization of finite element analysis.

According to an example, the comparing the at least one temperature measurement with the plurality of simulated temperature distributions comprises utilizing a matrix norm or a machine learning algorithm implemented by the processing unit.

The above aspects and examples will become apparent from and be elucidated with reference to the embodiments described hereinafter.

### BRIEF DESCRIPTION OF THE DRAWINGS

Exemplary embodiments will be described in the following with reference to the following drawings:
Fig. 1 shows a representation of monitoring of a device; and
Fig. 2 shows a representation of a measured temperature distribution being used to select a simulated temperature distribution.

### DETAILED DESCRIPTION OF EMBODIMENTS

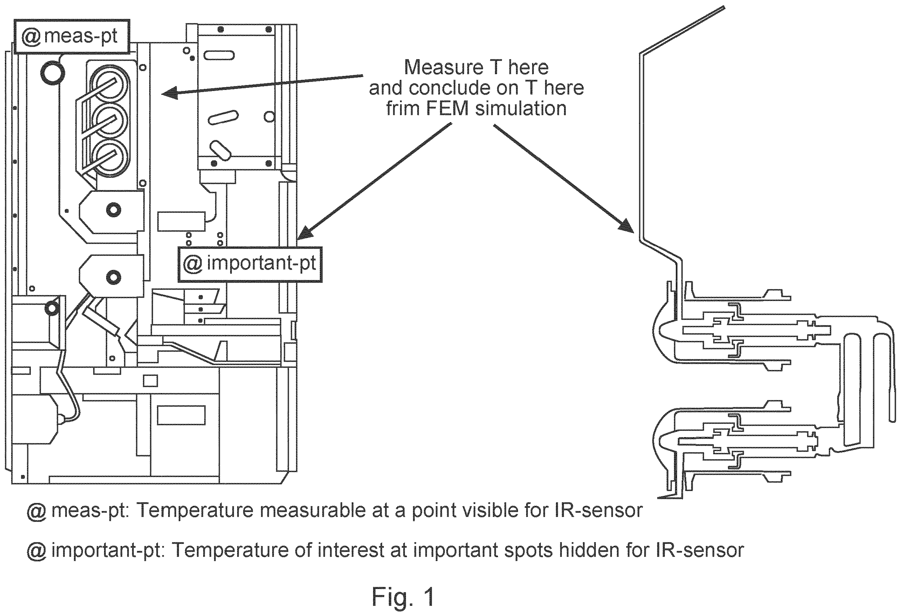

Figures 1-2 relate to a system for monitoring a device and to a method for monitoring a device.

In an example, the system for monitoring a device comprises at least one temperature sensor, a processing unit, and an output unit. The at least one temperature sensor is configured to acquire at least one temperature measurement at a first location of an operational device, and the first location is in thermal contact with a second location of the operational device. The at least one temperature sensor is configured to provide the at least one temperature measurement to the processing unit. The processing unit is configured to select a simulated temperature distribution of the first location of the simulated device from a plurality of simulated temperature distributions of the first location of the simulated device. The selection comprises a comparison of the at least one temperature measurement with the plurality of simulated temperature distributions of the first location. The plurality of simulated temperature distributions of the first location each relate to a different situation with respect to simulated operation of the simulated device, and for each of the different situations there is a correlation between a simulated temperature distribution of the first location and a simulated temperature at the second location of the simulated device. The processing unit is configured to determine that a hot spot exists or is developing at the second location of the operational device. The determination comprises utilization of the correlation between the simulated temperature distribution of the first location and the second location for the selected simulated temperature distribution of the first location of the simulated device (that was selected using the acquired at least one temperature measurement at the first location). The output unit is configured to output an indication of a fault at the second location of the operational device.

In an example, the temperature measurement can be at one location or a number of different locations. Thus, a temperature measurement at one location can be used to select a simulated correlation between that location where a measurement can be made to a second location where a measurement is difficult to make can be utilized to determine if there is a hot spot. However, a number of temperature measurements at different locations can be used to determine a number of simulated temperature distributions for the same locations, and a simulated correlation between simulated temperatures at these first locations and a second location, where it is physically difficult to take measurements can be used to determine if there is a problem at this hard to measure location.

According to an example, the at least one temperature sensor comprises one or more infrared cameras, one or more Surface Acoustic Wave sensor, or one or more RFID sensors.

According to an example, the at least one temperature measurement comprises a plurality of temperature measurements, and wherein the plurality of temperature measurements were acquired at the same time.

According to an example, the at least one temperature sensor is an infrared camera, and wherein the the at least one temperature measurement comprises an infrared image of the first location.

According to an example, the plurality of simulated temperature distributions are simulated in a process that comprises utilization of finite element analysis.

According to an example, the correlation between the simulated temperature distribution of the first location and the simulated temperature at the second location of the simulated device for each of the different situations was determined through utilization of finite element analysis.

According to an example, the comparison of the at least one temperature measurement with the plurality of simulated temperature distributions comprises utilization of a matrix norm or a machine learning algorithm implemented by the processing unit.

In an example, the method for monitoring a device comprises:
a) acquiring by at least one temperature sensor at least one temperature measurement at a first location of an operational device, and wherein the first location is in thermal contact with a second location of the operational device;
b) providing the at least one temperature sensor to a processing unit;
c) selecting by the processing unit a simulated temperature distribution of the first location of the simulated device from a plurality of simulated temperature distributions of the first location of the simulated device, wherein the selecting comprises comparing the at least one temperature measurement with the plurality of simulated temperature distributions of the first location, wherein the plurality of simulated temperature distributions of the first location each relate to a different situation with respect to simulated operation of the simulated device, and wherein for each of the different situations there is a correlation between a simulated temperature distribution of the first location and a simulated temperature at the second location of the simulated device;
d) determining by the processing unit that a hot spot exists or is developing at the second location of the operational device, and wherein the determining comprises utilizing the correlation between the simulated temperature distribution of the first location and the second location for the selected simulated temperature distribution of the first location of the simulated device; and
e) outputting by an output unit an indication of a fault at the second location of the operational device.

According to an example, the at least one temperature sensor comprises one or more infrared cameras, one or more Surface Acoustic Wave sensor, or one or more RFID sensors.

According to an example, the at least one temperature measurement comprises a plurality of temperature measurements, and wherein the plurality of temperature measurements were acquired at the same time.

According to an example, the at least one temperature sensor is an infrared camera, and wherein the the at least one temperature measurement comprises an infrared image of the first location.

According to an example, the plurality of simulated temperature distributions are simulated in a process that comprises utilization of finite element analysis.

According to an example, the correlation between the simulated temperature distribution of the first location and the simulated temperature at the second location of the simulated device for each of the different situations was determined through utilization of finite element analysis.

According to an example, the comparing the at least one temperature measurement with the plurality of simulated temperature distributions comprises utilizing a matrix norm or a machine learning algorithm implemented by the processing unit.

Thus, the new device monitoring technique enables a conclusion to be made as to the temperature at an important, and possibly even critical, but not accessible point of a power device: The temperature is measured at an accessible point by a sensor, for example by an infrared camera or other sensing methods like SAW, RFID. This measurement is then compared to simulations of a variety of situations. If the measurement corresponds to one of the pre-simulated situations, then the temperature at the important/critical point can determined from the simulation of this situation.

It was established that the correlation between the measured temperature by the sensor at a measurement point (meas-Pt) and the temperature at another location that cannot be measured (important-Pt) enables this problem to be overcome. Once this correlation is known, it is possible to conclude the temperature at the important-Pt from the measurement at the meas-Pt.

It was established that such a correlation can sometimes be derived from dedicated experiments during the product design phase. However, the correlation is only known for the measured situations (for example for the specific current that was applied in the experiment, and for specific situations such as connections that are loose or not perfect in a very specific way) and cannot be generalized to other situations or to other devices. Also, experiments take a lot of time and are costly. Also, measurements at the important or critical position or location (important-Pt) is experimentally are not always possible due to this location being inaccessible, and this can apply even in the design phase in the laboratory.

It was realised that instead of measurements, simulations (for example by Finite Elements FEM) can be used to determine the correlation between the measured temperature at the meas-Pt and the temperature at the important-Pt, by simulating the temperature at the measureable location (meas-Pt) and at the hard to measure location (important-Pt) for a series of different situations of current flow, and indeed of different theoretical situations such as different degrees of non-perfect connections etc. FEM simulations allow an analysis of the entire device and are not limited to accessible positions only. The situations can easily be varied. Thus, the desired correlation can be determined for a much larger number of different situations than with experiments. The devices can also easily be exchanged in the simulations. So once the simulation methodology is established it is far cheaper, more flexible, and more general than experiments to determine the desired correlation.

Fig. 1 shows an example of an overview of the new technique.

The novel monitoring system consists of the following elements:
1. A temperature measurement by a sensor
2. A series of pre-simulated FEM simulations of different situations
3. An algorithm to compare the measured temperature at the measurement point (meas-pt) with the pre-simulated FEM simulations and to decide which of these situations corresponds to the measurement

The measurement by the sensor results in a temperature distribution at the meas-Pt. In case of an IR-camera it comprises an array of temperatures that corresponds to the number of pixels of the optics of the IR-camera.

Alternatively the temperature distribution meas-Pt may result from several sensors placed at different locations in the switchgear (e.g. compartments) instead of only one IR cameras.

Alternatively the temperature distribution can consist of point-like temperature measurements, e.g. from distributed wireless sensors.

The FEM simulations are coupled electro-thermal simulations. The ohmic losses are computed by solving the Maxwell equations. There are several options to compute the temperature in the thermal part of the simulation:
Either the simple heat-conduction equation is solved. The heat exchange with the environment can be estimated via heat-transfer coefficients at the surface of the device.

Alternatively, a full CFD calculation can be conducted. This is more effort but is only necessary if convection and radiation cannot sufficiently precise be estimated via heat-transfer coefficients.

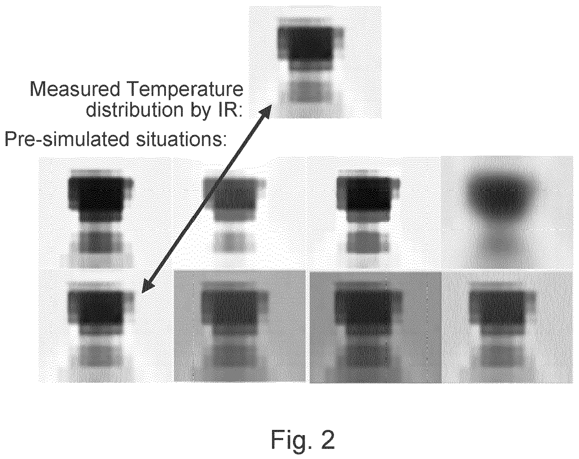

Several situations can be simulated corresponding to possible failure cases. The simulated temperature distributions at the meas-PT are then compared to the measured temperature distributions by the sensor, see Fig 2. This comparison can be done for example by a matrix norm, or by a machine learning algorithm. The best match of the pre-simulated situations with the measurement is then taken to be the current state of the device. The temperature at the important-PT can then be looked up in this simulation.

Fig. 2 illustrates the measured and simulated temperature distributions. A comparison of each simulated case with the measured one is being carried out, and the best match is identified.

## Claims

1. A system for monitoring a device, the system comprising:
- at least one temperature sensor;
- a processing unit; and
- an output unit;
wherein the at least one temperature sensor is configured to acquire at least one temperature measurement at a first location of an operational device, and wherein the first location is in thermal contact with a second location of the operational device;
wherein the at least one temperature sensor is configured to provide the at least one temperature measurement to the processing unit;
wherein the processing unit is configured to select a simulated temperature distribution of the first location of the simulated device from a plurality of simulated temperature distributions of the first location of the simulated device, wherein the selection comprises a comparison of the at least one temperature measurement with the plurality of simulated temperature distributions of the first location, wherein the plurality of simulated temperature distributions of the first location each relate to a different situation with respect to simulated operation of the simulated device, and wherein for each of the different situations there is a correlation between a simulated temperature distribution of the first location and a simulated temperature at the second location of the simulated device;
wherein the processing unit is configured to determine that a hot spot exists or is developing at the second location of the operational device, and wherein the determination comprises utilization of the correlation between the simulated temperature distribution of the first location and the second location for the selected simulated temperature distribution of the first location of the simulated device; and
wherein the output unit is configured to output an indication of a fault at the second location of the operational device upon the determination that a hot spot exists or is developing at the second location of the operational device.

2. System according to claim 1, wherein the at least one temperature sensor comprises one or more infrared cameras, one or more Surface Acoustic Wave sensor, or one or more RFID sensors.

3. System according to any of claims 1-2, wherein the at least one temperature measurement comprises a plurality of temperature measurements, and wherein the plurality of temperature measurements were acquired at the same time.

4. System according to any of claims 2-3, wherein the at least one temperature sensor is an infrared camera, and wherein the at least one temperature measurement comprises an infrared image of the first location.

5. System according to any of claims 1-4, wherein the plurality of simulated temperature distributions are simulated in a process that comprises utilization of finite element analysis.

6. System according to any of any of claims 1-5,
wherein the correlation between the simulated temperature distribution of the first location and the simulated temperature at the second location of the simulated device for each of the different situations was determined through utilization of finite element analysis.

7. System according to any of claims 1-6, wherein the comparison of the at least one temperature measurement with the plurality of simulated temperature distributions comprises utilization of a matrix norm or a machine learning algorithm implemented by the processing unit.

8. A method for monitoring a device, the method comprising:
a) acquiring by at least one temperature sensor at least one temperature measurement at a first location of an operational device, and wherein the first location is in thermal contact with a second location of the operational device;
b) providing the at least one temperature measurement to a processing unit;
c) selecting by the processing unit a simulated temperature distribution of the first location of the simulated device from a plurality of simulated temperature distributions of the first location of the simulated device, wherein the selecting comprises comparing the at least one temperature measurement with the plurality of simulated temperature distributions of the first location, wherein the plurality of simulated temperature distributions of the first location each relate to a different situation with respect to simulated operation of the simulated device, and wherein for each of the different situations there is a correlation between a simulated temperature distribution of the first location and a simulated temperature at the second location of the simulated device;
d) determining by the processing unit that a hot spot exists or is developing at the second location of the operational device, and wherein the determining comprises utilizing the correlation between the simulated temperature distribution of the first location and the second location for the selected simulated temperature distribution of the first location of the simulated device; and
e) outputting by an output unit an indication of a fault at the second location of the operational device upon the determination that a hot spot exists or is developing at the second location of the operational device.

9. Method according to claim 8, wherein the at least one temperature sensor comprises one or more infrared cameras, one or more Surface Acoustic Wave sensor, or one or more RFID sensors.

10. Method according to any of claims 8-9, wherein the at least one temperature measurement comprises a plurality of temperature measurements, and wherein the plurality of temperature measurements were acquired at the same time.

11. Method according to any of claims 8-10, wherein the at least one temperature sensor is an infrared camera, and wherein the the at least one temperature measurement comprises an infrared image of the first location.

12. Method according to any of claims 8-11, wherein the plurality of simulated temperature distributions are simulated in a process that comprises utilization of finite element analysis.

13. Method according to any of any of claims 8-12,
wherein the correlation between the simulated temperature distribution of the first location and the simulated temperature at the second location of the simulated device for each of the different situations was determined through utilization of finite element analysis.

14. Method according to any of claims 8-13, wherein the comparing the at least one temperature measurement with the plurality of simulated temperature distributions comprises utilizing a matrix norm or a machine learning algorithm implemented by the processing unit.

## Patentansprüche

1. Ein System zur Überwachung eines Geräts, wobei das System umfasst:
mindestens einen Temperatursensor,
eine Verarbeitungseinheit und
eine Ausgabeeinheit,
wobei der mindestens eine Temperatursensor eingerichtet ist, mindestens eine Temperaturmessung an einem ersten Ort eines in Betrieb befindlichen Geräts zu erfassen, und wobei der erste Ort in thermischem Kontakt mit einem zweiten Ort des in Betrieb befindlichen Geräts steht,
wobei der mindestens eine Temperatursensor eingerichtet ist, die mindestens eine Temperaturmessung an die Verarbeitungseinheit bereitzustellen,
wobei die Verarbeitungseinheit eingerichtet ist, eine simulierte Temperaturverteilung des ersten Ortes des simulierten Geräts aus einer Vielzahl von simulierten Temperaturverteilungen des ersten Ortes des simulierten Geräts auszuwählen,
wobei die Auswahl einen Vergleich der mindestens einen Temperaturmessung mit der Vielzahl der simulierten Temperaturverteilungen des ersten Ortes umfasst,
wobei die Vielzahl der simulierten Temperaturverteilungen des ersten Ortes jeweils mit einer anderen Situation in Bezug auf den simulierten Betrieb des simulierten Geräts in Zusammenhang steht und wobei für jede der verschiedenen Situationen eine Korrelation zwischen einer simulierten Temperaturverteilung des ersten Ortes und einer simulierten Temperatur am zweiten Ort des simulierten Geräts besteht, wobei die Verarbeitungseinheit eingerichtet ist, zu bestimmen, dass an dem zweiten Ort des in Betrieb befindlichen Geräts ein Hotspot existiert oder sich entwickelt,
wobei die Bestimmung die Nutzung der Korrelation zwischen der simulierten Temperaturverteilung des ersten Ortes und des zweiten Ortes für die ausgewählte simulierte Temperaturverteilung des ersten Ortes des simulierten Geräts umfasst,
und wobei die Ausgabeeinheit eingerichtet ist, eine Anzeige eines Fehlers am zweiten Ort des in Betrieb befindlichen Geräts auszugeben, wenn bestimmt wurde, dass an dem zweiten Ort des in Betrieb befindlichen Geräts ein Hotspot existiert oder sich entwickelt.

2. System nach Anspruch 1, wobei der mindestens eine Temperatursensor eine oder mehrere Infrarotkameras, einen oder mehrere Oberflächenwellen-Sensoren oder einen oder mehrere RFID-Sensoren umfasst.

3. System nach einem der Ansprüche 1 bis 2, wobei die mindestens eine Temperaturmessung eine Vielzahl von Temperaturmessungen umfasst, und wobei die Vielzahl von Temperaturmessungen zur gleichen Zeit erfasst wurde.

4. System nach einem der Ansprüche 2 bis 3, wobei der mindestens eine Temperatursensor eine Infrarotkamera ist, und wobei die mindestens eine Temperaturmessung ein Infrarotbild des ersten Ortes umfasst.

5. System nach einem der Ansprüche 1 bis 4, wobei die Vielzahl der simulierten Temperaturverteilungen in einem Verfahren simuliert wird, das die Nutzung der Finite-Elemente-Analyse umfasst.

6. System nach einem der Ansprüche 1 bis 5, wobei die Korrelation zwischen der simulierten Temperaturverteilung des ersten Ortes und der simulierten Temperatur am zweiten Ort des simulierten Geräts für jede der verschiedenen Situationen durch Nutzung der Finite-Elemente-Analyse bestimmt wurde.

7. System nach einem der Ansprüche 1 bis 6, wobei der Vergleich der mindestens einen Temperaturmessung mit der Vielzahl der simulierten Temperaturverteilungen die Nutzung einer Matrixnorm oder eines durch die Verarbeitungseinheit implementierten maschinellen Lernalgorithmus umfasst.

8. Ein Verfahren zur Überwachung eines Geräts, wobei das Verfahren umfasst:
a) Erfassen durch mindestens einen Temperatursensor mindestens einer Temperaturmessung an einem ersten Ort eines in Betrieb befindlichen Geräts, wobei der erste Ort in thermischem Kontakt mit einem zweiten Ort des in Betrieb befindlichen Geräts steht;
b) Bereitstellen der mindestens einen Temperaturmessung an eine Verarbeitungseinheit;
c) Auswählen durch die Verarbeitungseinheit einer simulierten Temperaturverteilung des ersten Ortes des simulierten Geräts aus einer Vielzahl von simulierten Temperaturverteilungen des ersten Ortes des simulierten Geräts, wobei das Auswählen einen Vergleich der mindestens einen Temperaturmessung mit der Vielzahl der simulierten Temperaturverteilungen des ersten Ortes umfasst, wobei die Vielzahl der simulierten Temperaturverteilungen des ersten Ortes jeweils mit einer anderen Situation in Bezug auf den simulierten Betrieb des simulierten Geräts in Zusammenhang steht und wobei für jede der verschiedenen Situationen eine Korrelation zwischen einer simulierten Temperaturverteilung des ersten Ortes und einer simulierten Temperatur am zweiten Ort des simulierten Geräts besteht;
d) Bestimmen durch die Verarbeitungseinheit, dass an dem zweiten Ort des in Betrieb befindlichen Geräts ein Hotspot existiert oder sich entwickelt, wobei das Bestimmen die Nutzung der Korrelation zwischen der simulierten Temperaturverteilung des ersten Ortes und des zweiten Ortes für die ausgewählte simulierte Temperaturverteilung des ersten Ortes des simulierten Geräts umfasst; und
e) Ausgeben durch eine Ausgabeeinheit einer Anzeige eines Fehlers am zweiten Ort des in Betrieb befindlichen Geräts, wenn bestimmt wurde, dass an dem zweiten Ort des in Betrieb befindlichen Geräts ein Hotspot existiert oder sich entwickelt.

9. Verfahren nach Anspruch 8, wobei der mindestens eine Temperatursensor eine oder mehrere Infrarotkameras, einen oder mehrere Oberflächenwellen-Sensoren oder einen oder mehrere RFID-Sensoren umfasst.

10. Verfahren nach einem der Ansprüche 8 bis 9, wobei die mindestens eine Temperaturmessung eine Vielzahl von Temperaturmessungen umfasst, und wobei die Vielzahl von Temperaturmessungen zur gleichen Zeit erfasst wurde.

11. Verfahren nach einem der Ansprüche 8 bis 10, wobei der mindestens eine Temperatursensor eine Infrarotkamera ist, und wobei die mindestens eine Temperaturmessung ein Infrarotbild des ersten Ortes umfasst.

12. Verfahren nach einem der Ansprüche 8 bis 11, wobei die Vielzahl der simulierten Temperaturverteilungen in einem Verfahren simuliert wird, das die Nutzung der Finite-Elemente-Analyse umfasst.

13. Verfahren nach einem der Ansprüche 8 bis 12, wobei die Korrelation zwischen der simulierten Temperaturverteilung des ersten Ortes und der simulierten Temperatur am zweiten Ort des simulierten Geräts für jede der verschiedenen Situationen durch Nutzung der Finite-Elemente-Analyse bestimmt wurde.

14. Verfahren nach einem der Ansprüche 8 bis 13, wobei der Vergleich der mindestens einen Temperaturmessung mit der Vielzahl der simulierten Temperaturverteilungen die Nutzung einer Matrixnorm oder eines durch die Verarbeitungseinheit implementierten maschinellen Lernalgorithmus umfasst.

## Revendications

1. Système destiné à surveiller un dispositif, le système comprenant :
- au moins un capteur de température ;
- une unité de traitement ; et
- une unité de sortie ;
dans lequel l'au moins un capteur de température est conçu pour acquérir au moins une mesure de température à un premier emplacement d'un dispositif opérationnel, et dans lequel le premier emplacement est en contact thermique avec un deuxième emplacement du dispositif opérationnel ;
dans lequel l'au moins un capteur de température est conçu pour fournir l'au moins une mesure de température à l'unité de traitement ;
dans lequel l'unité de traitement est conçue pour sélectionner une distribution de température simulée du premier emplacement du dispositif simulé parmi une pluralité de distributions de température simulées du premier emplacement du dispositif simulé, dans lequel la sélection comprend une comparaison de l'au moins une mesure de température avec la pluralité de distributions de température simulées du premier emplacement, dans lequel la pluralité de distributions de température simulées du premier emplacement sont chacune associées à une situation différente par rapport à un fonctionnement simulé du dispositif simulé, et dans lequel, pour chacune des situations différentes, il existe une corrélation entre une distribution de température simulée du premier emplacement et une température simulée au deuxième emplacement du dispositif simulé ;
dans lequel l'unité de traitement est conçue pour déterminer qu'un point chaud existe ou est en train de se développer au deuxième emplacement du dispositif opérationnel, et dans lequel la détermination comprend l'utilisation de la corrélation entre la distribution de température simulée du premier emplacement et le deuxième emplacement pour la distribution de température simulée sélectionnée du premier emplacement du dispositif simulé ; et
dans lequel l'unité de sortie est conçue pour délivrer une indication d'un défaut au deuxième emplacement du dispositif opérationnel lors de la détermination qu'un point chaud existe ou est en train de se développer au deuxième emplacement du dispositif opérationnel.

2. Système selon la revendication 1, dans lequel l'au moins un capteur de température comprend une ou plusieurs caméras infrarouges, un ou plusieurs capteurs d'ondes acoustiques de surface, ou un ou plusieurs capteurs RFID.

3. Système selon l'une quelconque des revendications 1 et 2, dans lequel l'au moins une mesure de température comprend une pluralité de mesures de température, et dans lequel la pluralité de mesures de température ont été acquises au même moment.

4. Système selon l'une quelconque des revendications 2 et 3, dans lequel l'au moins un capteur de température est une caméra infrarouge, et dans lequel l'au moins une mesure de température comprend une image infrarouge du premier emplacement.

5. Système selon l'une quelconque des revendications 1 à 4, dans lequel la pluralité de distributions de température simulées sont simulées dans un processus qui comprend l'utilisation d'une analyse par éléments finis.

6. Système selon l'une quelconque des revendications 1 à 5, dans lequel la corrélation entre la distribution de température simulée du premier emplacement et la température simulée au deuxième emplacement du dispositif simulé pour chacune des situations différentes a été déterminée au moyen d'une analyse par éléments finis.

7. Système selon l'une quelconque des revendications 1 à 6, dans lequel la comparaison de l'au moins une mesure de température avec la pluralité de distributions de température simulées comprend l'utilisation d'une norme matricielle ou d'un algorithme d'apprentissage automatique mis en œuvre par l'unité de traitement.

8. Procédé destiné à surveiller un dispositif, le procédé comprenant :
a) l'acquisition, par au moins un capteur de température, d'au moins une mesure de température à un premier emplacement d'un dispositif opérationnel, et dans lequel le premier emplacement est en contact thermique avec un deuxième emplacement du dispositif opérationnel ;
b) la fourniture de l'au moins une mesure de température à une unité de traitement ;
c) la sélection, par l'unité de traitement, d'une distribution de température simulée du premier emplacement du dispositif simulé parmi une pluralité de distributions de température simulées du premier emplacement du dispositif simulé, dans lequel la sélection comprend la comparaison de l'au moins une mesure de température avec la pluralité de distributions de température simulées du premier emplacement, dans lequel la pluralité de distributions de température simulées du premier emplacement sont chacune associées à une situation différente par rapport à un fonctionnement simulé du dispositif simulé, et dans lequel, pour chacune des situations différentes, il existe une corrélation entre une distribution de température simulée du premier emplacement et une température simulée au deuxième emplacement du dispositif simulé ;
d) la détermination, par l'unité de traitement, qu'un point chaud existe ou est en train de se développer au deuxième emplacement du dispositif opérationnel, et dans lequel la détermination comprend l'utilisation de la corrélation entre la distribution de température simulée du premier emplacement et le deuxième emplacement pour la distribution de température simulée sélectionnée du premier emplacement du dispositif simulé ; et
e) la délivrance, par une unité de sortie, d'une indication d'un défaut au deuxième emplacement du dispositif opérationnel lors de la détermination qu'un point chaud existe ou est en train de se développer au deuxième emplacement du dispositif opérationnel.

9. Procédé selon la revendication 8, dans lequel l'au moins un capteur de température comprend une ou plusieurs caméras infrarouges, un ou plusieurs capteurs d'ondes acoustiques de surface, ou un ou plusieurs capteurs RFID.

10. Procédé selon l'une quelconque des revendications 8 et 9, dans lequel l'au moins une mesure de température comprend une pluralité de mesures de température, et dans lequel la pluralité de mesures de température ont été acquises au même moment.

11. Procédé selon l'une quelconque des revendications 8 à 10, dans lequel l'au moins un capteur de température est une caméra infrarouge, et dans lequel l'au moins une mesure de température comprend une image infrarouge du premier emplacement.

12. Procédé selon l'une quelconque des revendications 8 à 11, dans lequel la pluralité de distributions de température simulées sont simulées dans un processus qui comprend l'utilisation d'une analyse par éléments finis.

13. Procédé selon l'une quelconque des revendications 8 à 12, dans lequel la corrélation entre la distribution de température simulée du premier emplacement et la température simulée au deuxième emplacement du dispositif simulé pour chacune des situations différentes a été déterminée au moyen d'une analyse par éléments finis.

14. Procédé selon l'une quelconque des revendications 8 à 13, dans lequel la comparaison de l'au moins une mesure de température avec la pluralité de distributions de température simulées comprend l'utilisation d'une norme matricielle ou d'un algorithme d'apprentissage automatique mis en œuvre par l'unité de traitement.
